# EUROPÄISCHE PATENTANMELDUNG

(11) **EP 1 515 212 A2**
(43) Veröffentlichungstag der Anmeldung: **16.03.2005**
(21) Anmeldenummer: 04021502.2
(22) Anmeldetag: 09.09.2004
(51) Int. Cl.: G06F 1/00

(54) **Verfahren und Vorrichtung zum automatischen Überwachen des Abrufs bereitgestellter elektronischer Datenmengen**

(30) Priorität: 09.09.2003 DE 10341894
(71) Anmelder: Webpay International AG, 6301 Zug (CH)
(72) Erfinder: Stangl, Norbert, 56154 Boppard (DE)
(74) Vertreter: Bittner, Thomas L., Dr.

(57) **Zusammenfassung**

Die Erfindung bezieht sich auf ein Verfahren und eine Vorrichtung zum automatischen Überwachen und zum automatischen Abrechnen eines Abrufs einer bereitgestellten elektronischen Datenmenge aus einer Datenbank (4), insbesondere eine Datenbank im Internet, über eine erste Online-Verbindung (5; 5') zwischen einem Nutzer-Computer (1) und der Datenbank (4). Bei der automatischen Prüfung der Zugangsberechtigung eines Nutzers für den Abruf der bereitgestellten Datenmenge aus der Datenbank (4) wird eine Bank-Servereinrichtung (7) einbezogen, die über eine Online-Verbindung (8) mit einer Servereinrichtung (3) verbunden ist, an die der Nutzer mit Hilfe des Nutzer-Computers (1) seine Anfrage gerichtet hat.

## Beschreibung

Die Erfindung liegt auf dem Gebiet des automatischen Überwachens und automatischen Abrechnens eines Abrufs einer bereitgestellten elektronischen Datenmenge aus einer Datenbank, insbesondere einer Datenbank im Internet.

In zunehmendem Umfang werden die über das Internet von Nutzern abrufbaren Inhalte, das heißt elektronische Datenmengen in Form von Text-, Bild- und/oder Tondaten, nicht mehr kostenlos sondern kostenpflichtig von Anbietern zur Verfügung gestellt. So bieten beispielsweise die Verlage für Zeitungen oder Zeitschriften elektronische Archive mit den in der Zeitschrift oder der Zeitung in Druckform publizierten Artikeln an. Beim Abrufen, das heißt dem elektronischen Herunterladen aus dem Archiv auf einen von dem Nutzer verwendeten Nutzer-Computer, beispielsweise zum Ausdrucken des Artikels mit Hilfe eines an den Nutzer-Computer angeschlossenen Druckers, wird dem Nutzer eine Gebühr in Rechnung gestellt, die auch datenmengenabhängig berechnet werden kann. Ein anderes Beispiel für das kostenpflichtige Bereitstellen zum Abruf elektronischer Informationen sind Verbraucherinformationen. Es stehen verschiedene Verfahren zur Verfügung, um den Umfang der abgerufenen, elektronischen Datenmengen exakt zu erfassen und in Abhängigkeit hiervon elektronische Kosten-/Gebühreninformation für die Abrechnung zu erzeugen. Ein solches Verfahren ist beispielsweise in dem Dokument EP 1 332 438 A1 beschrieben.

Zur Sicherstellung eines korrekten Ablaufs der automatisch durchgeführten Abrechnung beim Abrufen der elektronischen Datenmengen, insbesondere aus dem Internet, ist es unter anderem notwendig, die Berechtigung von Nutzern beim Zugriff auf die bereitgestellten elektronischen Datenmengen effizient und mit möglichst wenig Zeitaufwand, was Teil einer Kundenfreundlichkeit ist, automatisch zu prüfen. Um das automatische Abrechnen der abgerufenen elektronischen Datenmengen zu gewährleisten, ist es hierbei üblich, daß im Rahmen einer Prüfung der Zugangsberechtigung elektronische Informationen insbesondere über die Art des gewünschten Zahlungsvorgangs, beispielsweise mittels Kreditkarte oder Abbuchung von einem Bankkonto, zwischen dem von dem Nutzer verwendeten Nutzer-Computer und einer Servereinrichtung ausgetauscht werden, die den Vorgang zur Prüfung der Zugangsberechtigung handhabt. Die in diesem Zusammenhang ausgetauschten Informationen sind teilweise jedoch sicherheitsrelevant, was zu einem erheblichen technischen Aufwand führt, um den geforderten Sicherheitsbestimmungen bei dem elektronischen Datenaustausch zu genügen.

Aufgabe der Erfindung ist es, ein verbessertes Verfahren und eine verbesserte Vorrichtung zum automatischen Überwachen und zum automatischen Abrechnen eines Abrufs einer bereitgestellten elektronischen Datenmenge aus einer Datenbank zur Verfügung zu stellen, bei denen der Aufwand für einen sicheren elektronischen Datenaustausch vermindert ist, was zu einer Kosteneinsparung führt. Darüber hinaus soll der Bedienkomfort für den Nutzer optimiert werden.

Diese Aufgabe wird durch ein Verfahren nach dem unabhängigen Anspruch 1 sowie eine Vorrichtung nach dem unabhängigen Anspruch 4 gelöst.

Nach einem Aspekt der Erfindung ist ein Verfahren zum automatischen Überwachen und zum automatischen längenabhängigen Abrechnen eines Abrufs einer bereitgestellten elektronischen Datenmenge aus einer Datenbank, insbesondere eine Datenbank im Internet, über einer erste Online-Verbindung zwischen einem Nutzer-Computer und der Datenbank vorgesehen, wobei das Verfahren die folgenden Schritte umfaßt:
Prüfen einer Zugangsberechtigung eines Nutzers für den Abruf der bereitgestellten elektronischen Datenmenge aus der Datenbank, indem:
   - eine Nutzereingabe über den Nutzer-Computer mit Hilfe einer Servereinrichtung erfaßt wird, die über eine zweite Online-Verbindung mit dem Nutzer-Computer verbunden ist, wobei die erfaßte Nutzereingabe elektronische Informationen über einen Nutzernamen, ein Bankinstitut und ein Bankkonto umfaßt;
   - die erfaßte Nutzereingabe mittels der Servereinrichtung elektronisch analysiert und eine dritte Online-Verbindung zwischen dem Nutzer-Computer und einer Bank-Servereinrichtung gebildet wird, wobei in der Servereinrichtung die Bank-Servereinrichtung in Abhängigkeit vom Ergebnis des elektronischen Analysierens der erfaßten Nutzereingabe, insbesondere der elektronischen Information über das Bankinstitut und/oder das Bankkonto, automatisch mit Hilfe eines elektronischen Vergleichs des Ergebnisses des elektronischen Analysierens der erfaßten Nutzereingabe mit gespeicherten elektronischen Informationen ausgewählt wird und wobei über die Bank-Servereinrichtung zu dem Bankkonto Online-Kontotransaktionen im Rahmen einer Homebanking-Anwendung ausführbar sind;
   - elektronische Informationen über die erfaßte Nutzereingabe über eine vierte Online-Verbindung von der Servereinrichtung an die Bank-Servereinrichtung übertragen werden;
   - eine Nutzungsberechtigung des Nutzers für die Online-Kontotransaktionen mit Hilfe der Bank-Servereinrichtung verifiziert wird, wobei eine weitere Nutzereingabe über den Nutzer-Computer mit Hilfe der Bank-Servereinrichtung elektronisch erfaßt und analysiert wird und die weitere Nutzereingabe eine Nutzeridentifikation umfaßt; und
   - nach dem Verifizieren der Nutzungsberechtigung des Nutzers für die Online-Kontotransaktionen eine elektronische Statusinformation von der Bank-Servereinrichtung an die Servereinrichtung über die vierte Online-Verbindung übertragen wird;
Erzeugen und Speichern von elektronischen Registrierungsdaten mit Hilfe der Servereinrichtung, wenn beim Auswerten der elektronischen Statusinformation in der Servereinrichtung festgestellt wird, daß beim Verifizieren die Nutzungsberechtigung des Nutzers für die Online-Kontotransaktionen festgestellt wurde; Freigeben des Abrufs der bereitgestellten elektronischen Datenmenge aus der Datenbank über die erste Online-Verbindung zwischen dem Nutzer-Computer und der Datenbank; und automatisches Erfassen des Abrufs der bereitgestellten elektronischen Datenmenge über die erste Online-Verbindung und Erzeugen einer zugehörigen elektronischen Abrechnungsinformation für den Abruf der bereitgestellten elektronischen Datenmenge.

Nach einem weiteren Aspekt der Erfindung ist eine Vorrichtung zum automatischen Überwachen und zum automatischen Abrechnen eines Abrufs einer bereitgestellten elektronischen Datenmenge aus einer Datenbank, insbesondere eine Datenbank im Internet, über eine erste Online-Verbindung zwischen einem Nutzer-Computer und der Datenbank gemäß dem unabhängigen Anspruch 4 geschaffen.

Die Erfindung umfaßt den Gedanken, für die Prüfung und Registrierung einer Zugangsberechtigung eines Nutzers, welche häufig auch als Authentifizierung des Nutzers bezeichnet wird, für den Abruf von bereitgestellten elektronischen Datenmengen und dessen automatische Abrechnung eine Bank-Servereinrichtung einzubeziehen, über welche Online-Kontotransaktionen im Rahmen einer Homebanking-Anwendung von dem Nutzer ausgeführt werden können. Eine solche Bank-Servereinrichtung ist aufgrund der sicherungstechnischen Bestimmungen für den elektronischen Austausch von sicherheitsrelevanten Daten in Verbindung mit dem Online-Kontotransaktionen technisch ausgestattet. Dieses bedeutet, daß zwischen dem Nutzer-Computer und der Bank-Servereinrichtung elektronische Daten konform mit den geltenden Sicherheitsbestimmungen ausgetauscht werden können. Wenn nun die Zugangsberechtigung des Nutzers für den Abruf der bereitgestellten elektronischen Datenmengen aus der Datenbank zu prüfen ist, bedient sich die Servereinrichtung, welche zunächst eine Nutzereingabe des Nutzers über den Nutzer-Computer erfaßt, der Bank-Servereinrichtung zur Authentifizierung des anfragenden Nutzers, wobei die vorhandene technische Ausstattung der Bank-Servereinrichtung für den elektronischen Austausch sicherheitsrelevanter Daten mit dem Nutzer-Computer genutzt werden kann. Auf diese Weise kann der Aufwand zur technischen Umsetzung der Sicherheitsbestimmungen beim elektronischen Datenaustausch zwischen dem Nutzer-Computer und der Servereinrichtung in dem Umfang vermindert werden, wie der Austausch sicherheitsrelevanter Daten in die Bank-Servereinrichtung verlagert wird. Hierdurch ist die fortdauernde Pflege und Aktualisierung der notwendigen Maßnahmen zur Gewährleistung der Sicherheitsstandards nur für die Bank-Servereinrichtung notwendig, steht dort aber dann sowohl für übliche Homebanking-Transaktionen als auch für die Nutzung zur Prüfung der Zugangsberechtigung beim Abruf der bereitgestellten elektronischen Datenmengen aus der Datenbank zur Verfügung. Der Begriff Datenbank in der hier verwendeten Bedeutung umfaßt beliebige Quellen, in denen elektronische Datenmengen für einen Abruf bereitgestellt werden können, insbesondere Datenbanken im herkömmlichen Sinne, Servereinrichtungen, elektronische Archive oder dergleichen.

Mit Hilfe der Erfindung wird darüber hinaus der Bedienkomfort für den Nutzer verbessert. Da in der Bank-Servereinrichtung bereits die notwendigen Informationen in elektronischer Form für die Homebanking-Anwendungen vorliegen, können diese bei der Prüfung der Zugangsberechtigung des Nutzers für den Abruf der bereitgestellten elektronischen Informationen automatisch genutzt werden, ohne daß der Nutzer diese nochmals über den Nutzer-Computer eingeben muß, so daß der Zeitaufwand für den Nutzer verringert ist.

Zur Verbesserung des Sicherheitsstandards kann bei einer Fortbildung der Erfindung vorgesehen sein, daß zumindest die elektronischen Informationen beim Datenaustausch über die vierte Online-Verbindung zwischen der Servereinrichtung und der Bank-Servereinrichtung unter Verwendung verschlüsselter Daten ausgetauscht werden.

Eine weitere Effizienzsteigerung durch die Nutzung bereits vorhandener elektronischer Daten wird bei einer zweckmäßigen Ausgestaltung der Erfindung dadurch erreicht, daß die zugehörige elektronische Abrechnungsinformation an die Bank-Servereinrichtung übermittelt und die Bank-Servereinrichtung gemäß der zugehörige elektronische Abrechnungsinformation eine elektronische Abbuchung von dem Bankkonto automatisch veranlaßt.

Die Erfindung wird im folgenden anhand von Ausführungsbeispielen unter Bezugnahme auf eine Zeichnung näher erläutert. Hierbei zeigen:
- Figur 1: eine schematische Darstellung einer Vorrichtung zum automatischen Überwachen und zum automatischen Abrechnen eines Abrufs einer bereitgestellten elektronischen Datenmenge aus einer Datenbank;
- Figur 2: eine schematische Darstellung zur Erläuterung eines Verfahrens bei der Nutzung der Vorrichtung nach Figur 1; und
- Figur 3: ein Ablaufdiagramm beim automatischen Überwachen und automatischen Abrechnen des Abrufs der bereitgestellten elektronischen Datenmenge aus der Datenbank.

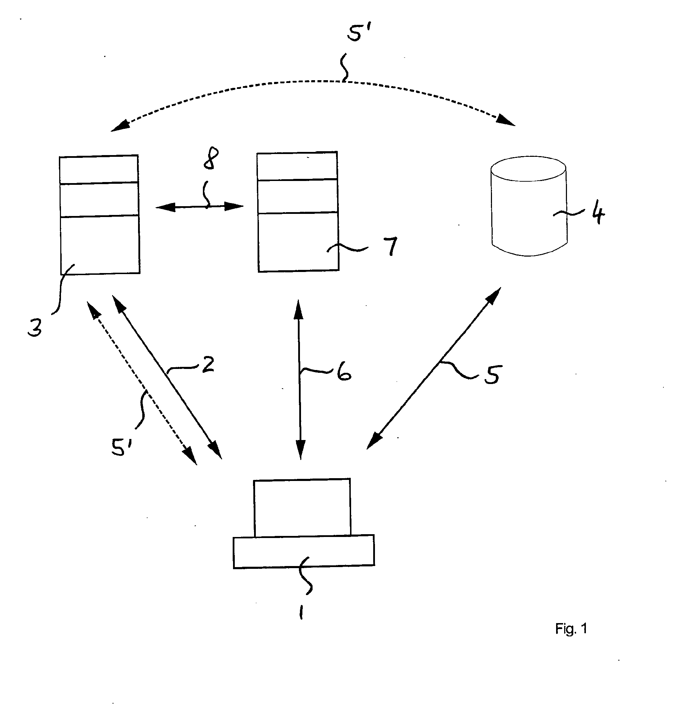

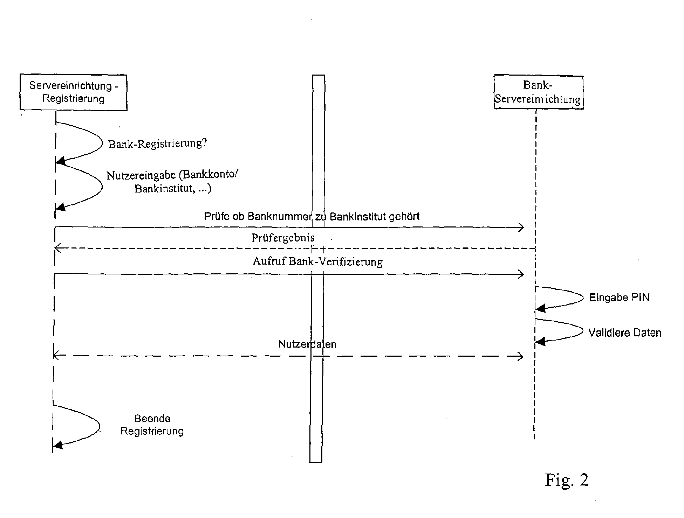

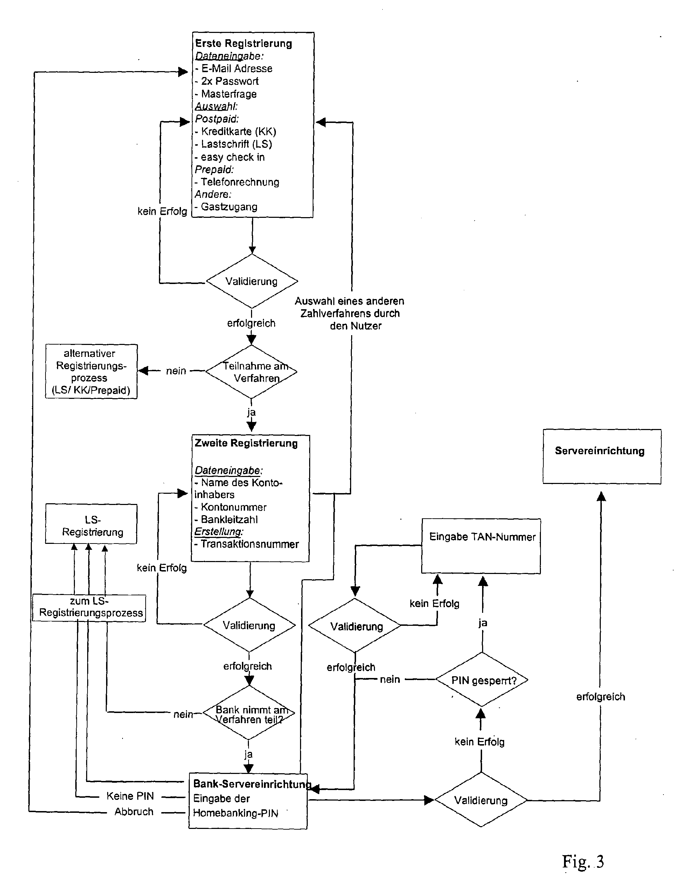

Im folgenden wird unter Bezugnahme auf die Figuren 1 bis 3 ein Verfahren zum automatischen Überwachen und zum automatischen Abrechnen, beispielsweise zum datenmengenabhängigen Abrechnen, eines Abrufs einer bereitgestellten elektronischen Datenmenge aus einer Datenbank, insbesondere einer Datenbank im Internet, beschrieben. Während in Figur 1 eine schematische Darstellung einer Vorrichtung zum Ausführen des Verfahrens gezeigt ist, stellt Figur 2 eine Übersicht zu den Schritten des Verfahrens dar, die in Figur 3 dann detaillierter gezeigt sind.

Gemäß Figur 1 ist ein Nutzer-Computer 1 über eine Online-Verbindung 2 zum Austausch elektronischer Daten mit einer Servereinrichtung 3 verbunden. Auf der Servereinrichtung 3 ist ein geeignetes Betriebssystem installiert, welches den Ablauf einer softwareimplementierten Anwendung umsetzt, insbesondere zur Prüfung einer Zugangsberechtigung und/oder zur Registrierung eines Nutzers für den Abruf bereitgestellter elektronischer Datenmengen aus einer Datenbank 4. Bei der Datenbank 4 handelt es sich um eine beliebige Quelle, in der elektronische Datenmengen für einen Abruf bereitgestellt werden, beispielsweise eine Datenbank im üblichen Sinn, eine Servereinrichtung, ein elektronisches Archiv oder dergleichen. Wenn ein Nutzer mit Hilfe des Nutzer-Computers 1 elektronische Datenmengen von der Datenbank 4 abrufen, das heißt zum Ausgeben mit Hilfe des Nutzer-Computers 1 über eine Online-Verbindung 5 erstmalig herunterladen möchte, werden mit Hilfe der Servereinrichtung 3 zunächst Nutzereingaben elektronisch erfaßt, die der Nutzer über den Nutzer-Computer 1 eingibt, beispielsweise mit Hilfe einer Tastatur oder einer Spracheingabe. Die mit Hilfe der Servereinrichtung 3 erfaßte Nutzereingabe umfaßt elektronische Informationen über einen Nutzernamen, ein Bankinstitut und ein Bankkonto. Um diese Informationen von dem Nutzer zu erfragen, erzeugt die Servereinrichtung 3 eine geeignete Eingabemaske, die über die Online-Verbindung 2 an den Nuzter-Computer 1 übermittelt wird.

In Abhängigkeit von den elektronischen Informationen über das Bankinstitut und das Bankkonto, die von der erfaßten Nutzereingabe umfaßt sind, wird dann mit Hilfe der Servereinrichtung 3 eine Online-Verbindung 6 zwischen dem Nutzer-Computer 1 und einer Bank-Servereinrichtung 7 gebildet. Des weiteren übermittelt die Servereinrichtung 3 über eine Online-Verbindung 8 zwischen der Servereinrichtung 3 und der Bank-Servereinrichtung 7 die elektronischen Informationen bezüglich des Nutzernamens, des Bankinstituts und des Bankkontos an die Bank-Servereinrichtung 7. Der Nutzer-Computer 1 ist über die Online-Verbindung 6 mit der Bank-Servereinrichtung 7 so verbunden, daß über eine geeignete Eingabemaske weitere Nutzereingaben von dem Nutzer des Nutzer-Computers 1 angefordert werden können, insbesondere eine Identifikationsnummer (PIN), die es der Bank-Servereinrichtung 7 nach einer elektronischen Auswertung der weiteren Nutzereingabe ermöglicht, die Berechtigung des Nutzers für Kontotransaktion zu dem Bankkonto im Rahmen einer Online-Banking-Anwendung zu verifizieren, die mittels der Bank-Servereinrichtung 7 implementiert ist. Derartige Online-Banking-Anwendungen werden heute von verschiedensten Bankinstituten für die jeweiligen Kunden angeboten und erfordern üblicherweise die Einhaltung der besonderen Sicherheitsbestimmungen beim elektronischen Datenaustausch im Zusammenhang mit Bankanwendungen.

Der Umfang der vom Nutzer mit Hilfe der Bank-Servereinrichtung 7 angeforderten weiteren Nutzereingabe kann in Abhängigkeit vom Anwendungsfall verschieden sein, wobei die Nutzereingabe stets ausreichend sein muß, um die Berechtigung des Nutzers zu prüfen. Wenn beim Verifizieren der Berechtigung mit Hilfe der Bank-Servereinrichtung 7 festgestellt wird, daß der Nutzer berechtigt ist, wird von der Bank-Servereinrichtung 7 eine Statusinformation erzeugt und über die Online-Verbindung 8 an die Servereinrichtung 3 übermittelt. Mit Hilfe der Statusinformation wird die Servereinrichtung 3 darüber informiert, daß der Nutzer, welcher sich mit der Anfrage zum Abruf elektronischer Datenmengen aus der Datenbank 4 an die Servereinrichtung 3 gewandt hat, authentifiziert ist. Von der Statusinformation können elektronische Informationen über das Bankkonto umfaßt sein, so daß die Servereinrichtung 3 später den Abruf elektronischer Datenmengen aus der Datenbank 4 dem Bankkonto zuordnen kann.

Nachdem der Nutzer unter Einbeziehung der Bank-Servereinrichtung 7 authentifiziert ist, können mit Hilfe der Servereinrichtung 3 weitere Registrierungsmaßnahmen, beispielsweise das Erfragen ergänzender Informationen, ausgeführt werden. Nach Abschluß der Registrierung werden in der Servereinrichtung 3 Registrierungsdaten erzeugt und elektronisch gespeichert. Danach ist der Nutzer des Nutzer-Computers 1 berechtigt, elektronische Datenmengen über die Online-Verbindung 5 aus der Datenbank 4 kostenpflichtig abzurufen. In Figur 1 ist eine direkte Online-Verbindung 5 zwischen dem Nutzer-Computer 1 und der Datenbank 4 angedeutet. Der kostenpflichtige Abruf der elektronischen Datenmengen kann jedoch über Umwege von der Datenbank 4 zu dem Nutzer-Computer 1 erfolgen, beispielsweise über weitere Servereinrichtungen im Internet (in Figur 1 nicht dargestellt), einschließlich der Servereinrichtung 3, was in Figur 1 mittels der Online-Verbindung 5' schematisch gezeigt ist.

Beim Abruf überwacht die Servereinrichtung 3 in welchem Umfang elektronische Datenmengen aus der Datenbank 4 abgerufen werden. Auf Basis dieser Information wird dann mit Hilfe der Servereinrichtung 3 automatisch eine zugehörige elektronische Abrechnungsinformation erzeugt. Diese zugehörige elektronische Abrechnungsinformation kann dann genutzt werden, um über die Online-Verbindung 8 elektronische Abbuchungsdaten an die Bank-Servereinrichtung 7 zu übermitteln, so daß die Bank-Servereinrichtung 7 in Abhängigkeit von der elektronischen Abbuchungsinformation eine elektronische Abbuchung von dem Bankkonto veranlaßt. Auf diese Weise ist insgesamt ein effizientes Verfahren zur Umsetzung der Schritte beim kostenpflichtigen Abruf von elektronischen Datenmengen aus der Datenbank 4 erreicht. Hierbei kann der Fachmann beliebige Verfahren zum Erfassen des Umfangs der abgerufenen elektronischen Datenmengen und der hierauf folgenden Kostenberechnung nutzen. Die Nutzung des konkreten Verfahrens mit dem Prozeß zum Prüfen der Zugangsberechtigung des Nutzers unter Einbeziehung der Bank-Servereinrichtung 7 kombiniert werden.

Das beschriebene Verfahren ist darüber hinaus unabhängig von dem konkreten Verfahren, mit dem die beim Erfassen der abgerufenen elektronischen Datenmenge automatisch berechneten Kosten letztlich in Rechnung gestellt werden. Auch eine Abrechnung mit Hilfe einer Kreditkarte kann im Anschluß an die Kostenerfassung vorgesehen sein.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum automatischen Überwachen und zum automatischen Abrechnen eines Abrufs einer bereitgestellten elektronischen Datenmenge aus einer Datenbank (4), insbesondere einer Datenbank im Internet, über eine erste Online-Verbindung (5; 5') zwischen einem Nutzer-Computer (1) und der Datenbank(4), wobei das Verfahren die folgenden Schritte umfaßt:
- Prüfen einer Zugangsberechtigung eines Nutzers für den Abruf der bereitgestellten elektronischen Datenmenge aus der Datenbank (4), indem:
- eine Nutzereingabe über den Nutzer-Computer (1) mit Hilfe einer Servereinrichtung (3) erfaßt wird, die über eine zweite Online-Verbindung (2) mit dem Nutzer-Computer (1) verbunden ist, wobei die erfaßte Nutzereingabe elektronische Informationen über einen Nutzernamen, ein Bankinstitut und ein Bankkonto umfaßt;
- die erfaßte Nutzereingabe mittels der Servereinrichtung (3) elektronisch analysiert und eine dritte Online-Verbindung (6) zwischen dem Nutzer-Computer (1) und einer Bank-Servereinrichtung (7) gebildet wird, wobei in der Servereinrichtung (3) die Bank-Servereinrichtung (7) in Abhängigkeit vom Ergebnis des elektronischen Analysierens der erfaßten Nutzereingabe, insbesondere der elektronischen Information über das Bankinstitut und/oder das Bankkonto, automatisch mit Hilfe eines elektronischen Vergleichs des Ergebnisses des elektronischen Analysierens der erfaßten Nutzereingabe mit gespeicherten elektronischen Informationen ausgewählt wird und wobei über die Bank-Servereinrichtung (7) zu dem Bankkonto Online-Kontotransaktionen im Rahmen einer Homebanking-Anwendung ausführbar sind;
- elektronische Analyseinformationen über die erfaßte und analysierte Nutzereingabe über eine vierte Online-Verbindung (8) von der Servereinrichtung (3) an die Bank-Servereinrichtung (7) übertragen werden;
- eine Nutzungsberechtigung des Nutzers für die Online-Kontotransaktionen mit Hilfe der Bank-Servereinrichtung (7) verifiziert wird, wobei eine weitere Nutzereingabe über den Nutzer-Computer (1) mit Hilfe der Bankservereinrichtung (7) elektronisch erfaßt und analysiert wird und die weitere Nutzereingabe eine Nutzeridentifikation umfaßt; und
- nach dem Verifizieren der Nutzungsberechtigung des Nutzers für die Online-Kontotransaktionen eine elektronische Statusinformation von der Bank-Servereinrichtung (7) an die Servereinrichtung (3) über die vierte Online-Verbindung (8) übertragen wird;
- Erzeugen und Speichern von elektronischen Registrierungsdaten mit Hilfe der Servereinrichtung (3), wenn beim Auswerten der elektronischen Statusinformation in der Servereinrichtung (3) festgestellt wird, daß beim Verifizieren die Nutzungsberechtigung des Nutzers für die Online-Kontotransaktionen festgestellt wurde;
- Freigeben des Abrufs der bereitgestellten elektronischen Datenmenge aus der Datenbank (4) über die erste Online-Verbindung (5; 5') zwischen dem Nutzer-Computer (1) und der Datenbank (4); und
- automatisches Erfassen des Abrufs der bereitgestellten elektronischen Datenmenge über die erste Online-Verbindung (5; 5') und Erzeugen einer zugehörigen elektronischen Abrechnungsinformation für den Abruf der bereitgestellten elektronischen Datenmenge.

2. Verfahren nach Anspruch 1, **dadurch gekennzeichnet, daß** zumindest die elektronischen Informationen beim Datenaustausch über die vierte Online-Verbindung (8) zwischen der Servereinrichtung (3) und der Bank-Servereinrichtung (7) unter Verwendung verschlüsselter Daten ausgetauscht werden.

3. Verfahren nach Anspruch 1 oder 2, **dadurch gekennzeichnet, daß** die zugehörige elektronische Abrechnungsinformation an die Bank-Servereinrichtung (7) übermittelt und die Bank-Servereinrichtung (7) gemäß der zugehörige elektronische Abrechnungsinformation eine elektronische Abbuchung von dem Bankkonto automatisch veranlaßt.

4. Vorrichtung zum automatischen Überwachen und zum automatischen Abrechnen eines Abrufs einer bereitgestellten elektronischen Datenmenge aus einer Datenbank (4), insbesondere eine Datenbank im Internet, über eine erste Online-Verbindung (5; 5') von der Datenbank (4) zu einem Nutzer-Computer(1), wobei die Vorrichtung weiterhin die folgenden Merkmale aufweist:
- eine Servereinrichtung (3), die über eine zweite Online-Verbindung (2) mit dem Nutzer-Computer (1) verbunden ist, mit den folgenden Merkmalen:
- Prüfmittel zum Prüfen einer Zugangsberechtigung eines Nutzers für den Abruf der bereitgestellten elektronischen Datenmenge aus der Datenbank (4);
- Erfassungsmittel zum Erfassen einer Nutzereingabe über den Nutzer-Computer (1), wobei die erfaßte Nutzereingabe elektronische Informationen über einen Nutzernamen, ein Bankinstitut und ein Bankkonto umfaßt;
- Analysemittel zum Analysieren der erfaßten Nutzereingabe; und
- Auswahlmittel zum automatischen Auswählen der Bank-Servereinrichtung (7) in Abhängigkeit vom Ergebnis des elektronischen Analysierens der erfaßten Nutzereingabe, insbesondere der elektronischen Information über das Bankinstitut und/oder das Bankkonto, mit Hilfe eines elektronischen Vergleichs des Ergebnisses des elektronischen Analysierens der erfaßten Nutzereingabe mit gespeicherten elektronischen Informationen; und
- eine Bank-Servereinrichtung (7), die über eine dritte Online-Verbindung (6) mit dem Nutzer-Computer (1) und eine vierte Online-Verbindung (8) mit der Servereinrichtung (3) verbunden ist, mit den folgenden Merkmalen:
- Transaktionsmittel zum Ausführen von Online-Kontotransaktionen für das Bankkonto im Rahmen einer Homebanking-Anwendung;
- Verifizierungsmittel zum Verifizieren einer Nutzungsberechtigung des Nutzers für die Online-Kontotransaktionen mit Hilfe der Bank-Servereinrichtung (7),
wobei eine weitere Nutzereingabe über den Nutzer-Computer (1) mit Hilfe der Bank-Servereinrichtung (7) elektronisch erfaßt und analysiert wird und die weitere Nutzereingabe eine Nutzeridentifikation umfaßt; und
- Übertragungsmittel zum Übertragen von elektronischer Statusinformation nach dem Verifizieren der Nutzungsberechtigung des Nutzers für die Online-Kontotransaktionen von der Bank-Servereinrichtung (7) an die Servereinrichtung (3) über die vierte Online-Verbindung (8);
wobei die Servereinrichtung (3) weiterhin die folgenden Merkmale aufweist:
- Mittel zum Erzeugen und zum Speichern von elektronischen Registrierungsdaten, wenn beim Auswerten der elektronischen Statusinformation in der Servereinrichtung (3) festgestellt wird, daß beim Verifizieren die Nutzungsberechtigung des Nutzers für die Online-Kontotransaktionen festgestellt wurde;
- Freigabemittel zum Freigeben des Abrufs der bereitgestellten elektronischen Datenmenge aus der Datenbank (4) über die erste Online-Verbindung (5; 5') zwischen dem Nutzer-Computer (1) und der Datenbank (4); und
- Überwachungsmittel zum automatisches Erfassen des Abrufs der bereitgestellten elektronischen Datenmenge über die erste Online-Verbindung und zum Erzeugen einer zugehörigen elektronischen Abrechnungsinformation für den Abruf der bereitgestellten elektronischen Datenmenge.
